# EUROPÄISCHE PATENTANMELDUNG

(11) **EP 2 031 555 A1**
(43) Veröffentlichungstag der Anmeldung: **04.03.2009**
(21) Anmeldenummer: 08165106.9
(22) Anmeldetag: 22.09.1999
(51) Int. Cl.: G06Q 30/00

(54) **Informationssystem für das zur Verfügung stellen von angeforderter und Werbeinformation**

(30) Priorität: 03.02.1999 RU 99102076
(62) Teilanmeldung aus: 99973671.3
(71) Anmelder: Moiseev, Boris Viktorovich, Moscow, 115407 (RU)
(72) Erfinder: Moiseev, Boris Viktorovich, 115407, Moskau (RU); Bunakov, Andrei Vadimovich, 111558, Moskau (RU); Ivanov, Vladimir Vladimovich, 129081, Moskau (RU)
(74) Vertreter: Einsel, Martin

(57) **Zusammenfassung**

Die Erfindung bezieht sich auf das Gebiet von Informationssystemen, Nachrichten-und Informationseinrichtungen und/oder Systemen zur Bereitstellung dem Kundea der Informationen auf seine Anfrage unter Moeglichkeit vom Heranziehen eines Satzes von Reklameinformation. Ein technisches Ergebnis besteht in der Erweiterung von Funktlonsmoegiichkeiten des Systems sowie in der Zunshme der verwendetsn technischen Mittel bei der Bereitstellung der Information. Durch das anmeldungsgemaesse System wird die Verwndung der fuer diese Zwecks angegebenen Mittel ueberall, wo es passt, und nicht nur an den speziell dafuer zugewiesensn Stellen, d.h. zu Hsuse, im Buero, unterwegs, unter Ausnutzung von verschiedenen Kommunikationsnetzen sichrgestellt.

Das System besitzt die Moeglichkeit, die information in jeder beliebigen, fuers System qeeigneten Berriebsweise zur Verfuegung zu stellen oder die Art der Reklameinformation zu waehlen, die fuer den Kunden von Interesse ist. Das System kann sinen Teil der Information und/oder ainen Teil der Reklsme in unterschiedlicher Reihenfolge bereitetellen, kann zu gleicher Zeit sowohl Information als auch Reklame zur Verfuegung stellen, was such fuer visuell als auch als Audioinformation sowie gedruckt bereitstellen. Ein technisches Ergebnis wird dadurch erreicht, dass des System wenigstens ein fuer den Benutzer bestimmtes Mittel, clas ueber eine Verbindungs-sinheit mit dem Spsicher zur Informationsaufbewahrang verbundon ist, ein Mittel zur Erzeugung eines Satzes der angefragten Information und der Reklameinformation aufweist, des mit dem Speicher zur Informntionsaufbe-wahrung und der Verbindungseinheit in Verbindung steht sowie einen Eingang zur Eingabe der Reklameinformation aufweist.

## Beschreibung

### TECHNISCHES GEBIET

Die Erfindung bezieht sich auf das Gebiet von Informationssystemen, Nachrichten-und Informationseinrichtungen und/oder Systemen zur Bereitstellung dem Kunden der Informationen auf seine Anfrage unter Moeglichkeit von Heranziehen eines Satzes von Reklameinformation.

### ZUGRUNDELIEGENDER STAND DER TECHNIK

Vorbekannt ist ein System der Bereitstellung der Reklameinformation, enthaltend einen im Geschafft angeordneten Ultraschallsender, der auf die Zone gerichtet ist, in welcher sich ein potentialer Kunde befinden kann. Ein jedes beliebige, sich in der Zone des Wirkungsbereiches des Empfaengers bewegende Objekt, das die Ultraschallwellen vom Sender zurueckstrahlt, ruft eine Aenderung des Zustandes vom Ultraschallempfaenger hervor. Der mit dem erwaehnten Empfaenger verbundenen Bildschirm trennt das Signal der Zustandsaenderung vom Empfaenger vermittels eines Komparators ab, schaltet einen Videorekorder zur Wiedergabe auf dem Fernsehbildschirm oder Display eines Videobandes mit Reklame ein (GB 2146821 A, G09 F 27/00, 24.04.85). Vorbekannt sind auch aehnliche audiovisuelle Systeme, die das Sichtbarwerden eines potentiellen Reklamebenutzers registrieren sowie audiovisuelle Einrichtungen mit der Reklameinformation einschalten (EP 0421941 A, G09 F 27/00, 10.04.91, GB 2270585 A, G09 F 27/00, 16.03.94).

Zur Zeit wird Reklame auch in den Telekommunikationsnetzen vorgefuehrt. z.B. in Internet.

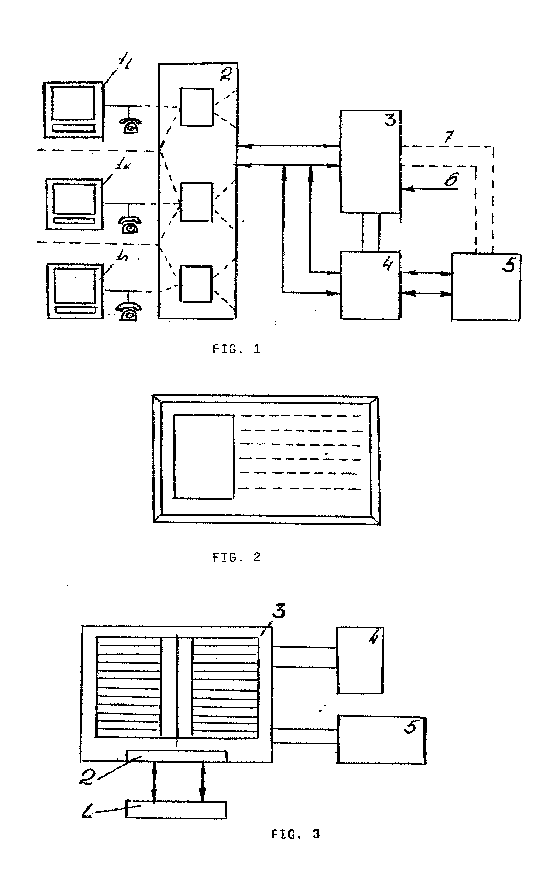

Vorbekannt ist auch das System der Bereitstellung der Reklameinformation im Internet (Honicatt Jerry, Internett, zweite Auflage, Kiew - Moskwa, Dialektik, S. 20-24, Anb. 1.1). wo die WEB-Seite USA Today angefuehrt ist, welche alle notwendigen Nemigkeiten enthaelt, die im Laufe des Tages erneuert werden; und wo ersichtlich ist, dass Microsoft Corp- einer der mehreren Sponsors ist, der Yahoo unterstuetzt (vgl. ebenda, Abb. 1.2)- Aber in der erwaehnten sind keine technischen Mittel zur Realisierung dieser Art der Reklame angefuehrt.

Mach dem technischen Wesen kommt den erfindungsgemaessen System das Informationssystem am neechsten, das zur Uebertragung sowohl der vom Benutzer anzufragenden Information, als auch der Reklameinformation bestimmt ist, das wenigstens ein Mittel fuer den Benutzer aufweist, das vermittels der Verbindungseinheit mit dem Speicher zur Informationsaufbewahrung verbunden ist (vgl. EP 0337539 A2, G 09 F 27/00, 18.10.89), der erwaehnte Speicher (ZU) speichert auch die Reklameinformation.

Das vorbekannte System ist zur Uebertragung der fuer den Benutzer interessanten Information bestimmt, die im Speicher zusammen mit der Reklamenachricht gespeichert ist.

Das System verfuegt ueber eine Mehrheit der Stellen zur Bereitstellung der visuellen Information, und das fuer den Benutzer bestimmt Mittel ist in Form eines Tefefons ausgebildet sowie mit dem Mittel zur Wiedergabe der Information in Form eines Bildschirms usw. verbunden. Vom Benutzer wird die ihn interessierende Information per Telefon angefordert, der Computer umwandelt die Anfrage des Benutzers ins Suchsignal zum Suchen der noetigen Information, welche aus dem Speicher auf den Bildschirm uebertragen wird. Die Stellen zur Bereitstellung der Information (distributors) koennen ebenso mit dem Kommunikationsnetz in Verbindung stehen, zur Zunahme der Benutzerzahl und zum Zwecke einer regelmaessigen Erneuerung der Daten mit Hilfe von Computermitteln. ]
Nachteilig bei diesem System ist das, dass die erwaehnten Stellen zur Bereitstellung der Information in den im votaus fuer diese Ziele zugewiesenen Orten angeordnet sind, waehrend es bequem waere, wenn das fuer den Benutzer bestimmte Mittel sich, beispielsweise, zu Hause, im Buero u.a.m. befindet.

In dem vorbekannten Informationssystem wird die Information und Reklamenachricht aus dem erwaehnten Speicher nur in einem Modus zur Bereitstellung der Information uebertragen, waehrend es manchmal notwendig ist, den Modus zur Bereitstellung sowohl der angefragten Information als auch der Reklamenachricht zu aendern, d.h., beispielsweise, es muss ein Teil der Infomationsnachricht, danach ein Teil der Reklamenachricht oder die vollkommene Reklame uebertragen werden oder zu gleicher Zeit muss sowohl die Information als auch die Reklame dargestellt werden. Darueber hinaus ist im System keine Auswahl der Reklameart vorgesehen, zum Beispiel, im Hinblick auf die den Benutzer interessierende Anfrage, d.h. in den vorbekannten Systemen ist das Aufzwingen der Reklame festzustellen.

### ERFINDUNGSTATBESTAND

Das technische Ergebnis der Erfindung besteht in der Erweiterung von Funktionsmoeglichkeiten des Systems sowie in der Zunahme der verwendeten technischen Mittel bei der Bereitstellung sowohl der angefragten als auch der Reklameinformation. Durch das anmeldungsgemaesse System wird die Verwendung der fuer diese Zwecke angegebenen Mittel ueberall, wo es passt, und nicht nur an den speziell dafuer zugewiesenen Stellen, d. h. zu Hause, im Buero, unterwegs, unter Ausnutzung von verschiedenen Kommunikationsnetzen sichergestellt.

Das System besitzt die Möglichkeit, die Information in jeder beliebigen, fuers System geeigneten Betriebsweise zur Verfuegung zu stellen oder die Art der Reklameinformation zu waehlen, die fuer den Kunden von Interesse ist. Das System kann einen Teil der Information und/oder einen Teil der Reklame in unterschiedlicher Reihenfolge bereitstellen, kann zu gleicher Zeit sowohl Information als auch Reklame zur Verfuegung stellen, was auch fuer den Kunden bequem ist, kann die Information sowohl visuell als auch als Audioinformation sowie gedruckt bereitstellen. Als System kann sowohl ein Telekommunikationsnetz, Internetnetz, d.h. globale Kommunikationsnetze, als auch einfache informierende Auskunftsschautafeln verwendet werden, welch in den oeffentlichen Stellen angeordnet werden. Die Einfuehrung in den Informationsblock der Reklameinformation wird es auch erlauben, ebenso zusaetzliche Finanzmittel zur Entwicklung der Informations-Suchsysteme zu bekommen sowie die Qualitaet der vom Netz zur Verfuegung gestellten Information zu verbessern.

Ein technisches Ergebnis wird dadurch erreicht, dass in das System, das wenigstens ein fuer den Benutzer bestimmtes Mittel enthaelt, das ueber eine Verbindungseinheit mit dem Speicher zur Informationsaufbewahrung verbunden ist, ein Mittel zur Erzeugung eines Blocks der angefragten Information und der Reklameinformation eingefuehrt ist, das mit dem Speicher zur Informationsaufbewahrung und der Verbindungseinheit in Verbindung steht sowie einen Eingang zur Eingabe der Reklameinformation aufweist.

Darueber hinaus kann ins System ein Speicher fuer Reklameinformation eingefuehrt werden, die mit dem angegebenen Eingang des erwaehnten Mittels in Verbindung steht, das zur Formierung bestimmt ist und auf einem Mikroprozes sor angeordnet sein kann.
Das erwaehnte Mittel zur Formierung kann mit der Moeglichkeit der Aenderung der Reihenfolge der Bereitstellung der angefragten Information und/oder der Reklameinformation ausgebildet sein.

Das erwaehnte Mittel zur Formierung kann ebenso mit der Moeglichkeit der Bereitstellung der Videoabbildung der angefragten Information und/oder der Reklameinformation ausgebildet sein.

Das erwaehnte Mittel zur Formierung kann ebenso mit der Moeglichkeit der gleizeitigen visuellen Darstellung der angefragten Information und der Reklameinformation ausgebildet sein.

Das erwaehnte Mittel zur Formierung kann ebenso mit der Moeglichkeit der Bereitstellung der visuellen angefragten Information sowie der Audio-Reklameinförmation augebildet sein.

Das erwaehnte Mittel zur Formierung kann, darueber hinaus, mit der Moeglichkeit des Drucks der angefragten Information ausgebildet sein.

Das fuer den Benutzer bestimmte Mittel kann in Form entweder eines Personalcomputers oder eines Telefons oder Videotelefons oder Funktelefons ausgebildet sein.

Darueber hinaus ist die Moeglichkeit der Ausbildung des Benutzersmittels in Form eines Steuerpultes vorgesehen. Dabei ist das Mittel zur Formierung des Blocks der angefragten Information und Reklameinformation in Form einer informierenden Schautafel ausgebildet.

Die Verbindungseinheit kann in Form entweder eines Multiplexers oder Kommunikationsnetzes oder Telekommunikationsnetzes ausgebildet sein.

Dabei kann das Kommunikationsnetz Fernsprechnetz bzw. Globales Netz sein.

Das Telekommnnikationsnetz kann Internet darstellen,

Das Mittel zur Formierung des Blocks von anzufragenden Informationen sowie Reklameinformation kann mit der Moeglichkeit der Auswahl vom Typ der Reklameinformation ausgebildet sein.

Der Speicher zur Informationsaufbewahrung kann als Server ausgebildet sein, wenn als Verbindungseinheit solche Netze verwendet werden, wie Telekoumunikationsnetze, globale Netze, Internet.

### KURZGEFASSTE FIGURENLISTE

In Fig.1 ist das Beipiel eines Funktionsschaltbildes vom System angefuehrt, in Fig.2 ist die Anordnung auf dem Bildschirm vom Display des Benetzermittels der angefragten Information und Reklame zu gleicher Zeit gezeigt, in Fig.3 ist das Beispiel der Verwirklichung des Systems in Form einer informierenden Schautafel (Auskunft) dargestellt.

### BEVORZUGTE AUSBILDUNGSVARIANTE VOM SYSTEM

Das anmeldungsgemaesse System enthaelt Mittel 1 fuer den Benutzer, die, beispielsweise, in Form eines Personalcomputers ausgebildet sind. Es kann eine Anzahl von den erwaehnten Mitteln sein, d.h. zum Beispiel im Falle, wenn der Personalcomputer einen Zugang zum Kommunikationsnetz hat: Fernsprechleitung, Telekommunikationsnetz des Typs Internet u.a.m. Das Mittel 1 fuer den Benutzer kann ein Telefon oder Videotelefon bzw einen Fernsteuerungspult darstellen. Die Mittel 1 fuer den Benutzer sind fuer die Formierung der Anfrage im Hinblick auf die den Benutzer interessierenden Informationen bestimmt und koennen mit der Moeglichkeit der Informationsabbildung ausgebildet werden, beispielsweise, auf dem Bildschirm vom Display des Personalcomputers vom Benutzer u.a.m. Die angegebenen Mittel 1 des Benutzers sind mit der Verbindungseinheit 2 verbunden. Die Verbindungseinheit 2 kann, wie oben angegeben, in Form vom Kommunikationsnetz, Fernsprechnetz, globalen Netz u.a.m. ausgebildet sein. Diese Einheit kann im Falle, wenn das System ein informierendes Tableau ist, einen einfachen Multiplexer (Kommunikationseinheit) darstellen, der nach Befehlssignalen, die vom Pult des Benutzermittels 1 eingegeben werden, die Information auf das Tableau des Mittels 3 fuer die Formierung des angefragten Informationsblocks und Reklameinformation bringt.

Die Verbindungseinheit 2 ist zur Verbindung vermittels der bekannten Mittel bzw. der Kommunikationsleitungen vom Benutzer und des Speichers 4 zur Informationsaufbewahrung bestimmt, welche die angefragte Information aufbewahrt, aber auch die Moeglichkeit hat, die Informationen verschiedener Art zu speichern, die beispielsweise mit verschiedener Zweckbesimmung der Datenbasis zusammenhaengt.

Dabei stellt der Speicher 4 im Falle der Verwirklichung des anmeldungsgemaessen Systems auf Basis der Telekommunikationsnetze einen Server, wo die Information gespeichert wird, die auf Anfrage dem Benutzer zur Verfuegung gestellt wird.

Aber zum Unterschied von den vorbekannten Netzen, wo der Server auf Anfrage die interessierende Information dem Benutzer ohne Umwandlung uebergibt, d.h. so, wie diese auf dem Server gespeichert ist, wird im vorliegenden System das Mittel 3 zur Blockformierung der angefragten Information sowie der Reklameinformation verwendet, vorlaeufig, bis die angefragte Information dem Benutzer zur Verfuegung gestellt wird.

Der Speicher 5 steht mit dem Eingang 6 zur Eingabe der Reklameinformation des erwaehnten Mittels 3 zur Formierung des Informationsblocks in Verbindung, das auf dem Mikroprozessor ausgebildet sein kann, auf dessen Speicherdatenleitung (Eingang 7) die angefragte Information vom Server (Speicher 4) uebergeben wird, dem anderen Eingang 6 der Speicherdatenleitung wird die Reklameinformation zugefuehrt. Die Reklameinformation kann hierbei von der Tastatur unter Ausnutzung des Eingabeblocks (in der Zeichnung nicht gezeigt} eingegeben werden, man kann sie auch mit Hilfe des Speichers fuer Reklameinfornnatian eingegeben werden. Dabei koennen vermittels der Programmittel des Mikroprozessors verschiedene Eingabeweisen sowohl der angefragten als auch der Reklameinformation vorgesehen werden.

Das Mikroprozessormittel 3, zum Bespiel, - Mikrokontroller --ist zur Formierung des Informationsblocks zur Vereinigung der vom Benutzer angefragten Information aus dem Speicher 4 mit der Reklameinformation bestimmt, die aus dem Speicher 5 oder unmittelbar von der Tastatur ankommt, sowie zur Formierung der Uebertragungsweise dieser oder jener Information entsprechend den Prozeduren, die von diesem Mittel vorgesehen sind. Diese Prozeduren koennen, beispielsweise, die folgenden sein.

Das erste Element des Informationsblocks ist Reklame, dann die angefragte Information.

Das erste Element des Informationsblocks ist das Verzeichnis der moeglichen Reklametype oder die Liste der verschiedenen Gebieten der Technik oder der Kenntnisse, fuer welche die Reklameinformation u.a.m. vorhanden ist.

Die Prozedur kann zu gleicher Zeit die Bereitstellung der anfragten Information bzw. der Reklame u.a.m. ausfuehren.

Nach der Vereinigung entsprechen der vorgegebenen Prozedur der angefragten und der Reklameinformation wird dieser Block vermittels der Verbindungseinheit 2 (durch das Netz) seinem Benutzer uebergeben.

Im Falle, dass es fuer Benutzer moeglich ist, die ihn interessierende Reklame auszuwaehlen, so kann das System im Dialogbetrieb funktionieren: der Benutzer erzeugt die Anfrage auf Information; die Information wird im Speicher 4 gesucht; ueber das Mittel 3 wird die Nachricht davon uebergeben, dass eine solche Information existiert, und das Verzeichnis der Reklamedienstleistungen wird uebergeben; der Benutzer waehlt die sie interessierende Reklamedienstleistung aus, sendet ins Netz seine Antwort und erhaelt den Block von der angefragten Information und den vom Benutzer gewaehlten Typ der Reklameinformation im entsprechenden Betrieb der Bereitstellung derselben.

Das anmeldungsgemaesse System kann ebenso in Form eines Informations-Auskunftstableaus, zum Beispiel, in Form eines Bildschirmes des Monitors oder einfach eines Tableaus durchgefuehrt werden. In diesem Fall formiert der Benutzer mit Hilfe eines Taststeuerpultes (Mittel 1) eine Anfrage der fuer ihn inressanten Information, der Umsetzer(in der Zeichnung nicht angezeigt) umsetzt den vom Steuerpult eingegebenen Befehl in ein Sigbal, das dem Suchobjekt entspricht, die Verbindungseinheit 2 (z.B. Multiplexen) schliesst den notwendigen Speicherplat des Speichers 4 an, auf welchem die angefragte Information gespeichert ist, gleichzeitig oder bevor auf dem Tableau des Mittels 3 die angefragte Infoermation wiederzugeben ist, wird dort die Reklame wiedergegeben.

### GEWERBLICHE ANWENDBARKEIT

Das erfindungsgemaesse Informationssystem kann in einem weiten Spektrum von Informations-und Information-Auskunftssystemen seine Verwendung finden, denn es fuehrt die Bereitstellung einer beliebigen, den Benutzer interessierenden Information durch sowie versieht diese mit Reklameinformation unterschiedlicher Art; hierbei besitzt das System eine Moeglichkeit, die Ordnung der Informationsbereitstellung zu andern. Das gegebene System kann mit Hilfe von vorbekannten lokalen, globalen Netzen sowie den Kommunikationsnetzen realisiert werden.

### Bezugszeichenliste

- 1: Mittel zur Formierung der Anfrage für den Benutzer (PC, Telefon)
- 2: Verbindungseinheit (Fernsprechnetz, globales Netz)
- 3: Mittel für die Formierung des Blocks aus Information und Reklameinformation (Mikrocontroller)
- 4: Speicher zur Aufbewahrung von Informationen
- 5: Speicher der Reklameinformation
- 6: Eingang zur Eingabe der Reklameinformation in das Mittel 3
- 7: Eingang der Speicherdatenleitung

## Patentansprüche

1. Informationssystem, enthaltend
wenigstens ein Mittel (1) für Benutzer, das über eine Verbindungseinheit (2) mit einem Speicher (4) zur Aufbewahrung von Information verbunden ist,
bei dem das Benutzermittel (1) in Form eines Telefons oder Videotelefons oder Funktelefons ausgebildet ist.
bei dem die Verbindungseinheit (2) in Form eines Kommunikationsnetzes oder Telekommunikationsnetzes ausgebildet und dieses ein mobiles Funktelefonnetz ist, und
bei dem das System ein Mittel (3) zur Formierung eines Blocks aus einer angefragten Information und einer Reklameinformation aufweist,
welches Mittel (3) mit dem Speicher (4) zur Aufbewahrung der Information und der Verbindungseinheit (2) in Verbindung steht sowie einen Eingang (6) zur Eingabe der Reklameinformation aufweist.

2. System nach Anspruch 1,
**dadurch gekennzeichnet,**
**dass** das System einen Speicher (5) zur Speicherung von Reklameinformationen aufweist, der mit dem erwähnten Eingang (6) des angegebenen Mittels (3) zur Formierung eines Blocks aus der angefragten Information und der Reklameinformation in Verbindung steht.

3. System nach Anspruch 2,
**dadurch gekennzeichnet,**
**dass** das erwähnte Mittel (3) zur Formierung eines Blocks aus der Information und der Reklameinformation mit der Möglichkeit der Änderung der Reihenfolge der Bereitstellung von angefragten Informationen und/oder Reklameinformationen oder gleichzeitig von angefragter Information und Reklameinformation ausgestattet ist.

4. System nach einem der vorstehenden Ansprüche,
**dadurch gekennzeichnet,**
**dass** das erwähnte Mittel (3) zur Formierung eines Blocks aus der angefragten Information und aus Reklameinformation auf einem Mikroprozessor ausgeführt ist.

5. System nach einem der vorstehenden Ansprüche,
**dadurch gekennzeichnet,**
**dass** das Mittel (3) zur Formierung eines Blockes aus der angefragten Information und aus Reklameinformation mit der Möglichkeit der Bereitstellung einer Videoabbildung von angefragten Informationen und/oder Reklameinformationen ausgebildet ist.

6. System nach Anspruch 5,
**dadurch gekennzeichnet,**
**dass** das angegebene Mittel (3) zur Formierung mit der Möglichkeit einer gleichzeitigen Visualisierung der angefragten Informationen sowie Reklameinförmationen ausgebikiet ist.

7. System nach einem der vorstehenden Ansprüche,
**dadurch gekennzeichnet,**
**dass** das angegebene Mittel (3) zur Formierung mit der Möglichkeit der Bereitstellung der visuellen angefragten Informationen sowie Audioreldameirrformationen ausgebildet ist

8. System nach einem der vorstehenden Ansprüche,
**dadurch gekennzeichnet,**
**dass** das erwähnte Mittel (3) zur Formierung des Blocks von angehalten Informationen und Reklameinformationen mit der Möglichkeit der Auswahl vom Typ der Reklameinformationen ausgebildet ist

9. System nach einem der vorstehenden Ansprüche,
**dadurch gekennzeichnet,**
**dass** der Speicher (4) zur Speicherung der Informationen als ein Server ausgebildet ist.
